# EUROPEAN PATENT SPECIFICATION

(11) **EP 2 552 639 B1**
(45) Date of publication and mention of the grant of the patent: **07.05.2014**
(21) Application number: 11713141.7
(22) Date of filing: 28.03.2011
(51) Int. Cl.: B23K 35/30, C22C 19/05

(54) **NICKEL-BASED ALLOY, WELDING CONSUMABLE FORMED FROM THE SAID ALLOY AND USE OF THE CONSUMABLE IN A WELDING PROCESS.**
NICKEL-BASIERTE LEGIERUNG, SCHWEISSELEKTRODE UND DEREN VERWENDUNG IN EINEM SCHWEISSVERFAHREN
ALLIAGE À BASE DE NICKEL, CONSOMMABLE DE SOUDAGE ET SON UTILISATION DANS UN PROCÉDÉ DE SOUDAGE

(30) Priority: 31.03.2010 US 751177
(43) Date of publication of application: 06.02.2013
(73) Proprietor: Ge-Hitachi Nuclear Energy Americas LLC, Wilmington, NC 28401 (US); The Tokyo Electric Power Company, Incorporated, Chiyoda-ku Tokyo 100-8560 (JP)
(72) Inventor: REBAK, Raul, Basilio, Niskayuna, NY 12309 (US); ANDRESEN, Peter, Louis, Niskayuna, NY 12309 (US); MORRA, Martin, Mathew, Niskayuna, NY 12309 (US); OKI, Suguru, Niskayuna, NY 12309 (US); TEZUKA, Hideshi, Yokohama-Shi Kanagawa-Ken 230-8510 (JP)
(74) Representative: Szary, Anne Catherine
(86) International application number: PCT/US2011/030188
(87) International publication number: WO 2011/123390

(56) References cited:
- WO-A2-2006/081258
- US-A1- 2004 062 677
- S.D. Kiser, R. Zhang: "A New Welding Material for Improved resistance to Ductiliity Dip Cracking", USA , 1 January 2008 (2008-01-01), pages 1-6, XP002638962, USA Retrieved from the Internet: URL:http://www.specialmetalswelding.com/pa pers/trend%20paper%20-2008.pdf [retrieved on 2011-05-26]

## Description

### BACKGROUND OF THE INVENTION

The present invention generally relates to welding processes and materials. More particularly, this invention relates to a corrosion-resistant filler metal and welding process particularly well suited for fabricating and repairing components of nuclear power plants (NPP).

In boiling water reactors (BWR) and pressurized water reactors (PWR) of nuclear power plants, coolant water is heated by heat generated by a fission reaction. In boiling water reactors, the temperature of the coolant water can reach or exceed about 550F (about 290C) at elevated pressures. As such, reactor components subjected to hot coolant waters are exposed to a highly corrosive environment.

Various alloys have been employed in the fabrication of reactor components, including low alloy steels, stainless steels, and nickel-based alloys. Notable examples of the latter include NiCrFe alloys such as the well-known Alloy 600 (76Ni-15Cr-8Fe) and Alloy 690 (62Ni-29Cr-9Fe). Methods of fabricating and repairing reactor components have included the use of various welding processes, for example, weld joining, weld overlay and weld buildup, and various welding techniques, for example, gas-tungsten arc welding (GTAW), metal gas arc welding (GMAW), shielded metal-arc welding (SMAW), laser welding, electron beam welding, and ultrasonic welding. Nickel-based filler metals are extensively used to weld components formed of low alloy steels, stainless steels, and nickel-based alloys.

Notable examples of nickel-based filler metals used to fabricate and repair structures formed of Alloys 600 and 690 include commercially available alloys known as Alloy 82, Alloy 182, Alloy 52, Alloy 152, and Alloy 132. Alloy 82 is generally reported to have a composition containing, by weight, 18.0-22.0% chromium, 2.5-3.5% manganese, 2.0-3.0% niobium+tantalum, not more than 3.0% iron, not more than 0.75% titanium, not more than 0.50% silicon, not more than 0.50% copper, not more than 0.75% cobalt, not more than 0.10% carbon, not more than 0.030% phosphorus, not more than 0.015% sulfur, and a minimum nickel content of 67.0%. Alloy 182 is generally reported to contain, by weight, 13.0-17.0% chromium, 5.0-9.5% manganese, 1.0-2.5% niobium+tantalum, not more than 10.0% iron, not more than 1.0% titanium, not more than 1.0% silicon, not more than 0.50% copper, not more than 0.12% cobalt, not more than 0.1% carbon, not more than 0.030% phosphorus, not more than 0.015% sulfur, and a minimum nickel content of 59.0%. Alloy 52 is a more recent alloy having a higher chromium content than Alloys 82 and 182. The composition of Alloy 52 is generally reported to be, by weight, 28.0-31.5% chromium, 7.0-11.0% iron, not more than 1.0% manganese, not more than 0.10% niobium+tantalum, not more than 1.0% titanium, not more than 1.10% aluminum, not more than 1.5% titanium+aluminum, not more than 0.50% silicon, not more than 0.30% copper, not more than 0.040% carbon, not more than 0.05% molybdenum, not more than 0.020% phosphorus, not more than 0.015% sulfur, with the balance nickel. Alloy 152 is generally reported to have a composition containing, by weight, 28.0-31.5% chromium, not more than 5.0% manganese, 1.0-2.5% niobium+tantalum, 7.0-12.0% iron, not more than 0.50% titanium, not more than 0.75% silicon, not more than 0.50% copper, not more than 0.05% carbon, not more than 0.030% phosphorus, not more than 0.015% sulfur, not more than 0.50% aluminum, not more than 0.50% molybdenum, with the balance nickel. Alloy 132 is generally reported to have a composition containing, by weight, 13.0-17.0% chromium, not more than 3.5% manganese, 1.5-4.0% niobium+tantalum, not more than 11.5% iron, not more than 0.75% silicon, not more than 0.50% copper, not more than 0.12% cobalt, not more than 0.080% carbon, not more than 0.030% phosphorus, not more than 0.020% sulfur, and a minimum nickel content of 62.0%. In addition to the above, several types of Alloy 52 have been proposed, including alloys introduced by Special Metals Corp. and a composition reported by Knolls Atomic Power Laboratory as Alloy 52i.

Alloy 82 and particularly Alloy 182 have been identified as susceptible to stress corrosion cracking (SCC) under certain nuclear power plants operating conditions, particularly when exposed to hot coolant water environments, including but not limited to coolant water at temperatures of about 290C or higher. Though exhibiting improved corrosion resistance compared to Alloys 82 and 182, Alloy 52 has proved to be more difficult to weld due to ductility dip cracking (DDC) and hot tearing. As such, it would be desirable if a nickel-based weld filler metal were available that was capable of exhibiting improved stress corrosion cracking resistance as well as improved weldability in order to overcome limitations of the prior art.

### BRIEF DESCRIPTION OF THE INVENTION

The present invention provides a nickel-based alloy and welding processes that use the alloy as a weld filler metal to fabricate and repair components, including components of nuclear power plant reactors that contact the hot coolant water of the reactor.

According to a first aspect of the invention, the nickel-based alloy consists of, by weight, 26 to 30% chromium, 2 to 4% iron, 2 to 4% manganese, 2 to 3% niobium, 1 to 3% molybdenum, not more than 0.6% titanium, not more than 0.03% carbon, not more than 0.05% nitrogen, not more than 0.6% aluminum, not more than 0.5% silicon, not more than 0.01 % copper, not more than 0.02% phosphorus, not more than 0.01 % sulfur, with the balance nickel and incidental impurities.

Other aspects of the invention include welding consumables formed of the alloy described above, and processes of welding components formed of nickel-based alloys using the alloy described above. A particular but nonlimiting example is the welding of components formed of NiCrFe alloys to produce components and structural elements of light water reactors for nuclear power plants.

A technical effect of this invention is that the nickel-based alloy is capable of exhibiting improved stress corrosion cracking resistance as well as improved weldability in comparison to conventional alloys such as Alloys 52, 82 132, 152 and 182.

Other aspects and advantages of this invention will be better appreciated from the following detailed description.

### BRIEF DESCRIPTION OF THE DRAWINGS

FIG. 1 schematically represents a portion of a structure formed by welding two components together using a nickel-based weld filler alloy of the present invention.
FIG. 2 schematically represents a portion of a structure formed by weld overlaying a component using a nickel-based weld filler alloy of the present invention.
FIG. 3 is a graph containing data that evidence an effect that chromium content has on stress corrosion cracking (SCC) propagation rate in several nickel-based alloys.

### DETAILED DESCRIPTION OF THE INVENTION

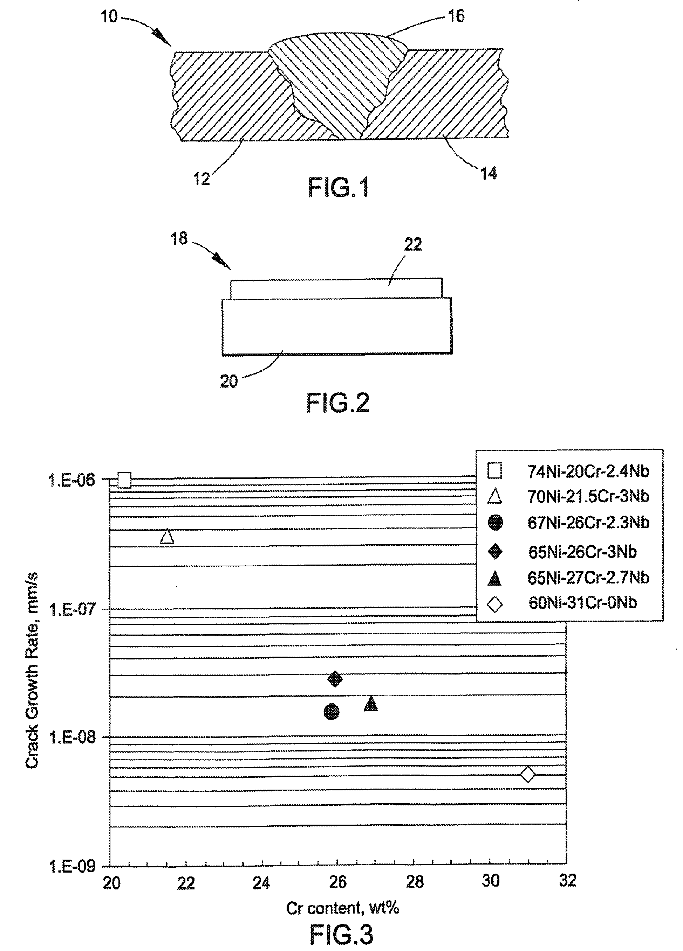

FIG. 1 schematically represents a structure 10 that has been fabricated or repaired by welding two components 12 and 14 together, producing a weldment 16 that metallurgically joins the components 12 and 14. FIG. 2 schematically represents a structure 18 that has been fabricated or repaired by weld overlaying a surface of a component 20 to form a weldment 22 in the form of an overlay layer on the component surface. The invention will be described in particular reference to the structures 10 and 18 being parts of a reactor of a nuclear power plant, for example, a light water reactor component that contacts the hot coolant water of the reactor, though other applications are foreseeable. The invention will also be described in particular reference to the components 12, 14 and 20 being formed of NiCrFe alloys, notable examples of which include Alloys 600 and 690, though it should be understood that the invention also encompasses the welding of various other alloys, notable examples of which include low alloy steels and stainless steels. Examples of the latter include austenitic 300 series stainless steels.

According to a preferred aspect of the invention, the weldments 16 and 22 are formed from a welding consumable formed of a nickel-based weld filler alloy, and the chemistry of the alloy is tailored to exhibit enhanced weldability and promote the corrosion and cracking resistance of the weldments 16 and 22. As used herein, welding consumable refers to electrodes, wires, powders and various other forms in which the alloy can be used during a welding process to produce the weldments 16 and 22. Particularly notable welding techniques include gas-tungsten arc welding (GTAW), metal gas arc welding (GMAW), shielded metal-arc welding (SMAW), laser welding, electron beam welding, and ultrasonic welding. Though the weldments 16 and 22 are represented as a butt joint and weld overlay, respectively, it should be understood that the alloy and welding technique can be used to form various other types of weldments, and can also be used to form weldments that fill cavities, form cladding or buildup material, and repair various other types of defects that might be present in the surface of a component.

Generally, the nickel-based weld filler alloy used to form the weldments 16 and 22 is formulated to have similar physical and mechanical properties to the alloys of the components 12, 14 and 20 to be welded. To this extent, the weld filler alloy of this invention contains nickel, chromium and iron, as do prior art weld filler alloys, such as Alloys 52, 82, 132, 152 and 182 that have been previously used to weld NiCrFe alloys such as Alloys 600 and 690, stainless steels, and low alloy steels. However, the weld filler alloy of this invention differs significantly in terms of its chromium and iron contents, as well as intentional additions of significant amounts of molybdenum and nitrogen. Broad, preferred and nominal chemistries for the alloy are summarized in Table I below. In addition to the listed constituents, the alloy may further contain incidental impurities, though such impurities preferably do not account for more than about 0.5 weight percent of the alloy.

**TABLE I**

| | Broad | Preferred | Nominal |
|---|---|---|---|
| Cr | 26 to 30 | 27 to 29 | 28.0 |
| Fe | 2 to 4 | 2.5 to 3.5 | 3.0 |
| Mn | 2 to 4 | 2.5 to 3.5 | 3.0 |
| Nb | 2 to 3 | 2.0 to 2.5 | 2.2 |
| Mo | 1 to 3 | 1.9 to 2.2 | 2.0 |
| Ti | ≤ 0.6 | 0.2 to 0.5 | 0.35 |
| C | ≤ 0.03 | ≤ 0.025 | 0.022 |
| N | ≤ 0.05 | 0.02 to 0.03 | 0.025 |
| Al | ≤ 0.6 | ≤ 0.5 | <0.5 |
| Si | ≤ 0.5 | ≤ 0.2 | 0.1 |
| Cu | ≤ 0.01 | ≤ 0.01 | ≤ 0.01 |
| P | ≤ 0.02 | ≤ 0.01 | ≤ 0.01 |
| S | ≤ 0.01 | 0.001 to 0.005 | 0.002 |
| Ni | balance | balance | balance |

The above alloying levels for chromium in the weld filler alloy were selected with the desire to promote resistance to stress corrosion cracking in hot water. The amount of chromium in the weld filler alloy is significantly higher than in Alloys 182 and 82 for the purpose of providing improved resistance to stress corrosion cracking (SCC). FIG. 3 shows the effect of chromium on the SCC propagation rate in several nickel-based alloys. It is evident from FIG. 3 that as the chromium content in the alloy increases the crack growth rate decreases. Regarding the concentration of chromium in the weld filler alloy of the present invention, the SCC growth rate is expected to be similar to that of Alloy 52, but significantly lower than for Alloy 182 and Alloy 82. Investigations leading to the present invention evidenced that as the chromium content in the alloy was increased, the crack growth rate decreased corresponding to increased resistance to stress corrosion cracking. As discussed below, the weld filler alloy also exhibits improved weldability properties in comparison with Alloy 52.

In addition, the weld filler alloy contains an intentional addition of molybdenum well in excess of its levels permitted in Alloys 52, 82, 132, 152 and 182, and also contains an intentional addition of nitrogen. The molybdenum addition was chosen for the purpose of improving the weldability properties of the alloy. Molybdenum promotes the formation of molybdenum carbides by reacting with the carbon in the alloy, reducing the amount of carbon available to react with chromium and produce chromium carbides, which is a primary cause for ductility dip cracking (DDC). As known in the art, ductility dip cracking is a measure of the weldability of the alloy. The addition of molybdenum also improves the corrosion resistance of the alloy in high temperature water. The maximum amount of molybdenum is kept at 3 to avoid solidification cracking.

Finally, the levels of the remaining constituents of the alloy, and particularly the levels of iron, niobium, carbon, manganese, silicon, nitrogen, phosphorus and sulfur, were chosen for various reasons. Maintaining the iron content relatively low (less than in Alloy 52) is for the purpose of improving weldability by reducing the likelihood of forming Laves phases and M₂₃C₆ carbides. Laves phases are brittle and are one of the main causes of solidification cracking. The weld filler alloy has a similar niobium content to Alloy 82, which has good weldability properties. Alloy 52 does not contain niobium and experiences poor weldability. Therefore, the addition of niobium was for the purpose of improving weldability by favoring the formation of niobium carbides instead of chromium carbides. The amount of carbon (not more than 0.03%) is lower than Alloys 182. Lower amounts of carbon are believed necessary to avoid sensitization, for example, during welding. The addition of manganese is believed beneficial since it improves weldability by enhancing the fluidity of the weld pool. The low level of silicon contained in the weld filler alloy inhibits the formation of Laves phases and the incidence of solidification cracking. Though the solubility of nitrogen in nickel alloys is limited, nitrogen in the specified limited amounts should promote weldability. Phosphorous and sulfur levels should be kept low to reduce hot cracking during welding.

In view of the above, weldments formed with the weld filler alloy of this invention are expected to exhibit excellent weldability during fabrication, repair and overlay processes using the alloy as a welding consumable, and the resulting weldments are expected to be resistant to cracking when the welded components are subjected to corrosion and elevated temperatures, as in the case of light water reactor components that contact coolant water at high temperatures, for example, about 290C or more. Consequently, a technical advantage of the present invention is the ability to achieve improvements in the overall performance of welded structures formed of low alloys steels, stainless steels and nickel-based alloys, and particularly NiCrFe alloys such as Alloys 600 and 690 used in nuclear power plants. Commercial advantages include potential cost savings and the minimization of repairs and replacements during shutdowns of nuclear power plants.

While the invention has been described in terms of a preferred embodiment, it is apparent that other forms could be adopted by one skilled in the art. Therefore, the scope of the invention is to be limited only by the following claims.

## Claims

1. A nickel-based alloy consisting of, by weight:
26 to 30% chromium;
2 to 4% iron;
2 to 4% manganese;
2 to 3% niobium;
1 to 3% molybdenum;
not more than 0.6% titanium;
not more than 0.03% carbon;
not more than 0.05% nitrogen;
not more than 0.6% aluminum;
not more than 0.5% silicon;
not more than 0.01 % copper;
not more than 0.02% phosphorus;
not more than 0.01 % sulfur;
with the balance nickel and incidental impurities.

2. The alloy according to claim 1, wherein the chromium content is 27 to 29 weight percent.

3. The alloy according to claim 1, wherein the chromium content is 28 weight percent.

4. The alloy according to claim 1, wherein the iron content is 2.5 to 3.5 weight percent.

5. The alloy according to claim 1, wherein the manganese content is 2.5 to 3.5 weight percent.

6. The alloy according to claim 1, wherein the niobium content is 2.0 to 2.5 weight percent.

7. The alloy according to claim 1, wherein the molybdenum content is 1.9 to 2.2 weight percent.

8. The alloy according to claim 1, wherein the titanium content is 0.2 to 0.5 weight percent.

9. The alloy according to claim 1, wherein the carbon content is not more than 0.025 weight percent.

10. The alloy according to claim 1, wherein the nitrogen content is 0.02 to 0.03 weight percent.

11. The alloy according to claim 1, wherein the aluminum content is less than 0.5 weight percent.

12. The alloy according to claim 1, wherein the silicon content is not more than 0.2 weight percent.

13. The alloy according to claim 1, wherein the copper content is less than 0.01 weight percent.

14. The alloy according to claim 1, wherein the phosphorus content is less than 0.01 weight percent.

15. The alloy according to claim 1, wherein the sulfur content is 0.001 to 0.005 weight percent.

16. A welding consumable formed of the alloy of claim 1.

17. A process of welding components using the alloy of claim 1, the process comprising welding the components with the alloy to produce a weldment on a structure.

18. The process according to claim 17, wherein the components are formed of one or more alloys chosen from the group consisting of low alloys steels, stainless steels and nickel-based alloys.

19. The process according to claim 17, wherein the components are formed of one or more NiCrFe alloys.

20. The process according to claim 17, wherein the structure contacts coolant water of a nuclear power plant.

## Patentansprüche

1. Nickelbasislegierung bestehend aus, nach dem Gewicht:
26 bis 30 % Chrom;
2 bis 4 % Eisen;
2 bis 4 % Mangan;
2 bis 3 % Niobium;
1 bis 3 % Molybdän;
höchstens 0,6 % Titan;
höchstens 0,03 % Kohlenstoff;
höchstens 0,05 % Stickstoff;
höchstens 0,6 % Aluminium;
höchstens 0,5 % Silicium;
höchstens 0,01 % Kupfer;
höchstens 0,02 % Phosphor;
höchstens 0,01 % Schwefel;
mit dem Rest Nickel und gelegentlichen Fremdstoffen.

2. Legierung nach Anspruch 1, wobei der Chromgehalt 27 bis 29 Gewichtsprozent beträgt.

3. Legierung nach Anspruch 1, wobei der Chromgehalt 28 Gewichtsprozent beträgt.

4. Legierung nach Anspruch 1, wobei der Eisengehalt 2,5 bis 3,5 Gewichtsprozent beträgt.

5. Legierung nach Anspruch 1, wobei der Mangangehalt 2,5 bis 3,5 Gewichtsprozent beträgt.

6. Legierung nach Anspruch 1, wobei der Niobiumgehalt 2,0 bis 2,5 Gewichtsprozent beträgt.

7. Legierung nach Anspruch 1, wobei der Molybdängehalt 1,9 bis 2,2 Gewichtsprozent beträgt.

8. Legierung nach Anspruch 1, wobei der Titangehalt 0,2 bis 0,5 Gewichtsprozent beträgt.

9. Legierung nach Anspruch 1, wobei der Kohlenstoffgehalt höchstens 0,025 Gewichtsprozent beträgt.

10. Legierung nach Anspruch 1, wobei der Stickstoffgehalt 0,02 bis 0,03 Gewichtsprozent beträgt.

11. Legierung nach Anspruch 1, wobei der Aluminiumgehalt weniger als 0,5 Gewichtsprozent beträgt.

12. Legierung nach Anspruch 1, wobei der Siliciumgehalt höchstens 0,2 Gewichtsprozent beträgt.

13. Legierung nach Anspruch 1, wobei der Kupfergehalt weniger als 0,01 Gewichtsprozent beträgt.

14. Legierung nach Anspruch 1, wobei der Phosphorgehalt weniger als 0,01 Gewichtsprozent beträgt.

15. Legierung nach Anspruch 1, wobei der Schwefelgehalt 0,001 bis 0,005 Gewichtsprozent beträgt.

16. Schweißzusatz, gebildet aus der Legierung nach Anspruch 1.

17. Verfahren zum Schweißen von Komponenten unter Verwendung der Legierung nach Anspruch 1, wobei das Verfahren das Schweißen der Komponenten mit der Legierung zum Erzeugen einer Schweißung an einer Struktur umfaßt.

18. Verfahren nach Anspruch 17, wobei die Komponenten aus einer oder mehreren Legierungen, ausgewählt aus der Gruppe bestehend aus niedriglegierten Stählen, Edelstählen und Nickelbasislegierungen, gebildet sind.

19. Verfahren nach Anspruch 17, wobei die Komponenten aus einer oder mehreren NiCrFe-Legierungen gebildet sind.

20. Verfahren nach Anspruch 17, wobei die Struktur mit Kühlwasser eines Kernkraftwerkes in Kontakt steht.

## Revendications

1. Alliage à base de nickel constitué des éléments suivants, en poids :
26 à 30 % de chrome ;
2 à 4 % de fer
2 à 4 % de manganèse ;
2 à 3 % de niobium p
1 à 3 % de molybdène ;
pas plus de 0,6 % de titane
pas plus de 0,03 % de carbone :
pas plus de 0,05 % d'azote ;
pas plus de 0,6 % d'aluminium ;
pas plus de 0,5 % de silicium ;
pas plus de 0,01 % de cuivre ;
pas plus de 0,02 % de phosphore ;
pas plus de 0,01 % de soufre
le restant étant formé de nickel et d'impuretés fortuites.

2. Alliage selon la revendication 1, dans lequel la teneur en chrome est de 27 à 29 % en poids.

3. Alliage selon la revendication 1, dans lequel la teneur en chrome est de 28 % en poids.

4. Alliage selon la revendication 1, dans lequel la teneur en fer est de 2,5 à 3,5 % en poids.

5. Alliage selon la revendication 1, dans lequel la teneur en manganèse est de 2,5 à 3,5 % en poids.

6. Alliage selon la revendication 1, dans lequel la teneur en niobium est de 2,0 à 2,5 % en poids.

7. Alliage selon la revendication 1, dans lequel la teneur en molybdène est de 1,9 à 2,2 % en poids.

8. Alliage selon la revendication 1, dans lequel la teneur en titane est de 0,2 à 0,5 % en poids.

9. Alliage selon la revendication 1, dans lequel la teneur en carbone n'est pas supérieure à 0,025 % en poids.

10. Alliage selon la revendication 1, dans lequel la teneur en azote est de 0,02 à 0,03 % en poids.

11. Alliage selon la revendication 1, dans lequel la teneur en aluminium est inférieure à 0,5 % en poids.

12. Alliage selon la revendication 1, dans lequel la teneur en silicium n'est pas supérieure à 0,2 % en poids.

13. Alliage selon la revendication 1, dans lequel la teneur en cuivre est inférieure à 0,01 % en poids.

14. Alliage selon la revendication 1, dans lequel la teneur en phosphore est inférieure à 0,01 % en poids.

15. Alliage selon la revendication 1, dans lequel la teneur en soufre est de 0,001 à 0,005 % en poids.

16. Consommable de soudage forme d'un alliage selon la revendication 1.

17. Procédé de soudage de composants en utilisant l'alliage selon la revendication 1, le procédé comprenant le soudage des composants avec l'alliage pour produire une soudure sur une structure.

18. Procédé selon la revendication 17, dans lequel les composants sont formés d'un ou plusieurs alliages choisis dans le groupe constitué des aciers faiblement alliés, des aciers inoxydables et des alliages à base de nickel.

19. Procédé selon la revendication 17, dans lequel les composants sont formés d'un ou plusieurs alliages NiCrFe.

20. Procédé selon la revendication 17, dans lequel la structure vient en contact avec l'eau de refroidissement d'une centrale nucléaire.
